# EUROPÄISCHE PATENTANMELDUNG

(11) **EP 4 231 492 A1**
(43) Veröffentlichungstag der Anmeldung: **23.08.2023**
(21) Anmeldenummer: 23157386.6
(22) Anmeldetag: 17.02.2023
(51) Int. Cl.: H02J 7/00

(54) **ÜBERSPANNUNGSSCHUTZSYSTEM FÜR ENERGIESPEICHER**

(30) Priorität: 18.02.2022 DE 102022103959; 26.07.2022 DE 102022118754; 13.09.2022 DE 102022123386
(71) Anmelder: M&P Motion Control and Power Electronics GmbH, 01257 Dresden (DE)
(72) Erfinder: Peppel, Torsten, 01257 Dresden (DE)
(74) Vertreter: Schied, Sebastian

(57) **Zusammenfassung**

Die Aufgabe der Erfindung ist es, ein Überspanungsschutzsystem für einen Energiespeicher und eine Umgehungslösung fehlerhafter Komponenten des Energiespeichers zu schaffen.

Überspanungsschutzsystem für einen Energiespeichers, wobei der Energiespeicher zumindest ein Energiespeichermodul (1) mit in Serie geschalteten Energiespeicherzellen umfasst, wobei das zumindest eine Energiespeichermodule (1) in einem Rack (2) anordbar ist oder das ein, zwei oder mehr Energiespeichermodule (1) zumindest ein Rack (2) bilden, wobei zumindest zwei oder mehr der Energiespeichermodule (1) in einem Rack (2) oder als Rack (2) in Serie geschalten sind,
dadurch gekennzeichnet,
dass jeweils zumindest eines der Energiespeichermodule (1) eine Überspanungsschutzschaltung (6) aufweist oder dass eine Vielzahl von Energiespeichermodulen (1) gemeinsam eine Überspanungsschutzschaltung (6) aufweisen , wobei die Überspanungsschutzschaltung (6) parallel zum zumindest einen der Energiespeichermodule (1) oder parallel zur Vielzahl von Energiespeichermodulen (1) oder parallel zu den Energiespeichermodulen (1) eines Racks (2) geschalten ist.

## Beschreibung

Die Erfindung betrifft ein Überspanungsschutzsystem für Energiespeicher im Mittelspannungsbereich, basierend auf Kondensatoren, vorzugsweise Doppellagenkondensatoren, oder auf aufladbaren Batterien.

Für Energiespeicher werden in zumindest einem Strang Energiespeichermodule in Serie geschaltet, wobei jeweils ein Energiespeichermodul eine Anzahl in Serie geschalteter Energiespeicherzellen, beispielsweise in Form von Einzelzellen umfasst, wobei diese beispielsweise Doppelschichtkondensator oder Lithium-Ion-Batterien sein können , umfasst. Je nach eingesetzten Energiespeicherzellen liegt die Zellspannung beispielsweise bei 2,5V bis 3V.

Die Energiespeichermodule lassen sich in Serie zu zumindest einem Strang oder beispielsweise in zumindest einem Rack zu zumindest einen Strang anordnen oder zusammenschalten. Ebenso lassen sich mehrere Racks in Serie zu zumindest einem Strang kombinieren oder zusammenschalten.

Ebenso ist eine parallele Kombination von Strängen oder Racks vorgesehen.

Ein Energiespeicher je nach Ausbaustufe umfassen als kleinste Einheit oder Speichereinheit zumindest ein Energiespeichermodul und/oder zumindest ein Rack mit zumindest einem Energiespeichermodul. Mehrere Energiespeichermodule können zu einer Überwachungseinheit, bspw. einem Rack zusammengefasst sein. Ein Rack kann eine physische Einheit, beispielsweise ein Schrank sein. Ebenso können die Energiespeichermodule auch ohne Rack gekoppelt oder zusammengefasst sein.

Im Niederspannungsbereich werden in Serie geschaltete Energiespeicherzellen über ein Monitoringsystem überwacht. Das Monitoringsystem umfasst unterschiedliche Überwachungskomponenten. Je Energiespeichermodul ist eine Modulüberwachungseinheit vorhanden. Die Modulüberwachungseinheit überwacht jede einzelne Energiespeicherzelle oder Gruppen von oder einer Vielzahl von Energiespeicherzellen des Energiespeichermodul zumindest hinsichtlich der Spannung und die Temperatur zumindest des Energiespeichermoduls. Eine Gruppe von Energiespeicherzellen kann auch alle Energiespeicherzellen eines Energiespeichermoduls umfassen.

Mehrere Racks können in Serie und/oder parallel zu einem Strang zusammengefasst werden. Ebenso können mehrere Energiespeichermodule rackübergreifend in Serie und/oder parallel zu einem Strang zusammengefasst werden.

Die serielle Verschaltung oder die Verbindung zwischen seriell aufeinander folgender Racks bildet einen Unterstrang. Der Unterstrang kann jeweils zwischen den seriell aufeinander folgenden Racks separat ausgeführt sein. Im Bereich zwischen den seriell aufeinander folgenden und den jeweils parallel geschalteten Racks können die einzelnen Unterstränge auch zu einem gemeinsamen Unterstrang zusammengefasst sein.

Bei festgestellten Fehlern kann einfach abgeschaltet werden und es ist möglich mit Redundanzen, beispielsweise mit zumindest eines alternativen Stranges oder Racks oder Energiespeichermoduls, zu arbeiten. Dafür werden zusätzliche Speichereinheiten installiert.

Im Mittelspannungsbereich ist der Zugang zu dem System im geladenen Zustand jedoch nicht mehr möglich. Jeder Fehler der Überwachung ist als Abschaltgrund zu werten, da der Zustand des Energiespeichers nicht mehr bekannt ist. Ein Zuschalten oder Abschalten von Redundanzen ist damit in den meisten Fällen nicht wirtschaftlich möglich.

Für den Mittelspannungsbereich wird bei den gegebenen Zellspannungen eine sehr hohe Anzahl an Energiespeicherzellen benötigt. Dementsprechend ergibt sich ebenso eine Vielzahl an Energiespeichermodulen und an Racks. Durch die hohe Anzahl der Einzelkomponenten ist ein solcher Mittelspannungsspeicher sehr unzuverlässig, da bedingt durch die Vielzahl an Komponenten die Ausfallrate hoch ist.

Fehlersituationen können beispielsweise vorliegen, wenn eine Zelle hochohmig wird und der Stromfluss durch den Strang unterbrochen ist. Es kann weder geladen oder entladen werden. Wird versucht den Energiespeicher zu entladen verschieben sich nur die Potentiale der beiden getrennten Speicherteile; wird die Spannungsdifferenz über der Trennstelle zu hoch kommt es zum Durchschlag. Im folgendem kann sich ein leitender Kanal ausbilden, es wäre aber auch möglich, dass der Kondensator öffnet. Der Speicher muss in einer solchen Situation heruntergefahren werden. Wie beschrieben verschieben sich die Potentiale an der Trennstelle, da die Teilpotentiale nicht entladen werden, die Gesamtspannung aber durch das Entladen geringer wird. An der Fehlerstelle werden dann während des Entladens laufend Durchschläge erfolgen oder es bildet sich ein leitfähiger Kanal. Die Energie des gesamten Strangs muss durch die Fehlerstelle fließen. Dadurch erhöht sich die Brandgefahr.

Die Aufgabe der Erfindung ist es daher, ein Überspanungsschutzsystem für einen Energiespeicher und eine Umgehungslösung fehlerhafter Komponenten des Energiespeichers zu schaffen.

Mit der Erfindung wird im angegebenen Anwendungsfall erreicht, dass ein Überspanungsschutzsystem für einen Energiespeichers geschaffen wird, wobei der Energiespeicher zumindest ein Energiespeichermodul mit in Serie geschalteten Energiespeicherzellen umfasst, wobei das zumindest eine Energiespeichermodul in einem Rack anordbar ist. So können ein, zwei oder mehr Energiespeichermodule zumindest ein Rack bilden. Zumindest zwei oder mehr der Energiespeichermodule sind in einem Rack oder als Rack in Serie geschalten.

Die in einem Rack untergebrachten Energiespeichermodule können als eine Vielzahl von Energiespeichermodulen betrachtet werden oder zu einem Energiespeichermodul zusammengefasst sein.

Erfindungsgemäß ist vorgesehen, dass jeweils zumindest eines der Energiespeichermodule eine Überspanungsschutzschaltung aufweist oder dass eine Vielzahl von Energiespeichermodulen gemeinsam eine Überspanungsschutzschaltung aufweisen, wobei die Überspanungsschutzschaltung parallel zum zumindest einen der Energiespeichermodule oder parallel zur Vielzahl von Energiespeichermodulen oder parallel zu den Energiespeichermodulen eines Racks geschalten ist.

So ist es ebenfalls vorgesehen, dass mit den Energiespeichermodulen eines Racks gemeinsam eine Überspanungsschutzschaltung verbunden ist, wobei die Überspanungsschutzschaltung parallel zu den Energiespeichermodulen eines Racks geschalten ist. Unabhängig von der Betriebsweise, also beispielsweise beim Laden oder Entladen, stellt die Überspanungsschutzschaltung eine Überladungsschutzschaltung dar. Ebenso ist die Überspanungsschutzschaltung eine Spannungsüberwachung, welche, beispielsweise insbesondere beim Entladen und/oder durch schaltungs- oder bauteilimmanente Induktivitäten auftretend, negative Spannungsimpulse bzw. eine Potentialumkehr erkennen bzw. unterbinden oder begrenzen.

Als ein wesentlicher Parameter wird beispielsweise die Spannung U_{M} des jeweiligen Energiespeichermoduls bzw. die Spannung U_{R} des jeweiligen Racks überwacht. Ändert sich im Betrieb, insbesondere beim Laden die Spannung U_{M} bzw. Spannung U_{R} durch eine Fehlstelle, beispielsweise wegen einer hochohmigen Energiespeicherzelle, stark und kommt in den Überspannungsbereich, wird mittels der Überspanungsschutzschaltung verhindert, dass der Potentialunterschied an der Fehlerstelle über den für das jeweilige Energiespeichermodul zulässigen Spannungswert steigt. Vorzugsweise wird der kritische Anteil der Ladespannung am fehlerhaften Modul vorbeigeleitet oder mittels Verbraucher verringert werden. Damit wirkt die Überspanungsschutzschaltung als Überladungsschutzschaltung.

Dementsprechend lassen sich in einem Fehlerfall, beispielsweise bei einer hochohmigen Energiespeicherzelle kritische Zustände wie der Anstieg der Spannung U_{M} eines Energiespeichermoduls in den Überspannungsbereich vermeiden oder ausgleichen.

Ebenso lässt sich mittels der Überspanungsschutzschaltung verhindert, dass es beim Entladen oder einem negativen Energiepuls, also bei Strömen aus dem Energiespeicher die maximale Spannung für die Energiespeicherzellen im Rückwärtsbetrieb an den Klemmpunkten die zulässige Spannung übersteigen.

Vorteilhaft weist die jeweilige Überspanungsschutzschaltung eine Spannungsüberwachung auf. Indem die jeweilige Überspanungsschutzschaltung eine Spannungsüberwachung aufweist, kann die Überspanungsschutzschaltung bedarfsgerecht betrieben und angesteuert werden oder eigenständig eingreifen. Die Spannungsüberwachung ist vorzugswiese je Energiespeichermodul oder Energiespeichermodulgruppe vorhanden, so dass ein Fehlerfall in einem fehlerbehafteten Energiespeichermodul oder in einer fehlerbehafteten Energiespeichermodulgruppe schnell erkannt und ebenso schnell darauf reagiert oder eine kritische Spannung durch die Überspanungsschutzschaltung begrenzt werden kann.

So kann die Spannungsüberwachung anhand der gemessenen Spannungswerte unmittelbar die Überspanungsschutzschaltung der jeweiligen Energiespeichermodulgruppe ansteuern.

Vorteilhaft lassen sich zwei oder mehr Racks in Serie und/oder parallel zu einem Strang schalten oder kombinieren. Ebenso lassen sich zumindest zwei Stränge parallel schalten. Ein Vorteil der Erfindung liegt in einer zuverlässigen Absicherung des Energiespeichers und dessen Energiespeichermodulen gegen eine Überspannung an den Energiespeicherzellen beim Laden und Entladen.

Vorteilhafte Ausgestaltungen der Erfindung sind in den Unteransprüchen dargestellt.

In einer Weiterbildung umfasst die Überspanungsschutzschaltung zumindest ein Mittel zum Laden oder Entladen des Energiespeichermodules oder der Vielzahl von Energiespeichermodulen.

Ein Mittel zum Laden oder Entladen ist beispielsweise ein Ladezweig oder Drosselladezweig und/oder ein Ausgleichszweig oder Drosselentladezweig. Die Überspanungsschutzschaltung umfasst damit je nach Laderichtung und Entladerichtung oder Arbeitsweise der Überspanungsschutzschaltung eine Ladekomponente und/oder eine Entladekomponente oder Ausgleichskomponente.

Je nach Laderichtung und Entladerichtung oder Arbeitsweise der Überspanungsschutzschaltung, die unabhängig von der Betriebsweise des Energiespeicher sein kann, stellt entsprechend der Ladezweig auch einen Ausgleichszweig und umgekehrt der Ausgleichszweig auch einen Ladezweig dar. Entsprechend lässt sich ein defektes oder fehlerbehaftetes Energiespeichermodul oder eine defekte oder fehlerbehaftete Gruppe von Energiespeichermodulen als Energiespeichermodulgruppe eines Racks oder des verbliebenen Strang beim Laden oder beim Entladen vor eine Überspannung schützen oder es kann eine Überspannung oder Energie an davor liegende oder danach liegende Energiespeichermodule abgeleitet werden. Hierbei wird erreicht, dass fehlerbehaftetes Energiespeichermodul oder eine defekte oder fehlerbehaftete Gruppe von Energiespeichermodulen als Energiespeichermodulgruppe im Rack oder Strang zunächst verbleiben können, während die verbliebenen Energiespeichermodule oder die verbliebenen Energiespeichermodulgruppen geladen und/oder auch entladen werden können, ohne dass es zu kritischen Zuständen an der fehlerbehafteten Energiespeichermodule oder Energiespeichermodulgruppe kommt. Der jeweilige Betrieb des Racks oder des Stranges bleibt aufrechterhalten. Somit kann eine Gesamtabschaltung eines Racks oder eines Stranges auch im Fehlerfall vermieden werden. Ebenso werden kritische Zustände an Auftrennstellen oder Fehlstellen der Energiespeichermodule oder Energiespeichermodulgruppe vermieden. Vorteilhaft wird auch ein Ladungsausgleich der Energiespeichermodulgruppen erreicht.

In einer Weiterbildung umfasst die Überspanungsschutzschaltung oder das zumindest eine Mittel zum Laden oder Entladen des Energiespeichermodules oder der Vielzahl von Energiespeichermodulen zumindest eine Diode.

So lässt sich bei einer Überspanungsschutzschaltung die Ausgleichsschaltung oder die Entladekomponente mittels einer zum jeweiligen Energiespeichermodul oder zur jeweiligen Energiespeichermodulgruppe parallel geschalteten Diode in Sperrrichtung vorsehen. Je nach Energiespeichermodul oder Umfang einer Energiespeichermodulgruppe und eingesetzten Energiespeicherzellen bemisst sich im Normalbetrieb die Spannung über der Diode. An einer Fehlerstelle kann dann auch diese Spannung stehen. Die Diode wird erst leitfähig, wenn die Spannung über der Diode um diese Spannung abgesunken ist. Der Einsatz einer Diode bietet beispielsweise den Vorteil, dass die maximale Spannung im Rückwärtsbetrieb an den Klemmpunkten nur 0,7 V beträgt, während beim Entladen der Rest des Energiespeichers um die defekte Stelle geleitet wird. Der Energiespeicher kann normal entladen werden, an der defekten Stelle bleibt eine Spannung erhalten. Das durch die Diode überbrückte Energiespeichermodul bzw. die durch die Diode überbrückte Energiespeichermodulgruppe muss für einen Austausch oder eine Wartung dann langsam entladen werden. Damit verringert sich die Gefahr eines Brands.

Weiterhin kann eine Diode zum Begrenzen eines negativen Spannungsimpulses insbesondere beim Entladen und/oder durch schaltungs- oder bauteilimmanente Induktivitäten auftretend, vorgesehen sein, die in Sperrrichtung parallel zum jeweiligen Energiespeichermodul oder zur jeweiligen Energiespeichermodulgruppe oder zu mehreren Energiespeichermodulgruppen geschalten ist.

Jeweils eine Diode im in der Überspanungsschutzschaltung als Mittel zum Laden oder Entladen des Energiespeichermodules oder der Vielzahl von Energiespeichermodulen begünstigt das zielgerichtete Verschieben von Energie, die sich aus einer Überspannung beim Laden oder Entladen über einem fehlerhaften Energiespeichermodul oder über einer jeweiligen fehlerhaften Energiespeichermodulgruppe ergeben würde, in jeweils im Strang oder Rack seriell davor oder dahinter liegende Energiespeichermodule oder Energiespeichermodulgruppen.

Vorteilhaft kann die Überspanungsschutzschaltung oder das zumindest eine Mittel zum Laden oder Entladen des Energiespeichermoduls oder der Vielzahl von Energiespeichermodulen einen elektronischen Schalter aufweisen.

So lässt sich die Ladeschaltung oder die Ladekomponente mittels eines ebenfalls zum jeweiligen Energiespeichermodul oder zur jeweiligen Energiespeichermodulgruppe parallel geschalteten elektronischen Schalters, der im Überladungsfall geschlossen und bei Erreichen einer unkritischen Spannung wieder geöffnet wird, realisieren.

Bei Strömen in den Speicher kann zusätzlich der elektronische Schalter, wie ein Transistor beispielsweise ein IGBT zur Überbrückung von Überspannungen an einem defekten Energiespeichermodul oder einer defekten Gruppe von Energiespeichermodule geschaltet werden. Dieser würde dann bei einer Überspannung über dem Energiespeichermodul oder der Energiespeichermodulgruppe einschalten. Ist die Spannung im Betriebsbereich, sperrt der Transistor. Bei einer zu hohen Spannung wir der elektronische Schalter geschalten und überbrückt die Fehlerstelle bzw. das Energiespeichermodul oder die fehlerbehaftete Energiespeichermodulgruppe. Geht die Spannung wieder in den Arbeitsbereich des Energiespeichermoduls oder der Energiespeichermodulgruppe zurück, schaltet der elektronische Schalter wieder aus.

Der elektronische Schalter ist getaktet oder lässt sich vorzugsweise getaktet ansteuern. Ebenso ist auch ein spannungsabhängiger zeitlich begrenzter Dauerbetrieb des elektronischen Schalters möglich. Es lassen sich damit kontrolliert eine Überspannung oder verfügbare verschiebbare Energie ableiten oder verschieben. Zudem lassen sich Bauelemente und Komponenten hinsichtlich der Belastbarkeit einfacher auslegen, was Kosten und den Platzbedarf senkt und den Schaltungsaufbau vereinfacht.

Da jedoch beim alleinigen Schalten des elektronischen Schalters die Spannung über der fehlerbehafteten Energiespeichermodulgruppe zusammenbrechen würde, sind zur Aufrechterhaltung der Funktion weitere Komponenten zur Strombegrenzung und Spannungskontrolle vorgesehen.

In einer Weiterbildung weist die Überspanungsschutzschaltung oder das zumindest eine Mittel zum Laden oder Entladen des Energiespeichermoduls oder der Vielzahl von Energiespeichermodulen einen Verbraucher auf. Dieser Verbraucher kann bevorzugt eine ohmsche Last sein. Andere Lasten sind nicht ausgeschlossen. Ebenso sind als Verbraucher elektronische Lasten oder Kombinationen unterschiedlicher Lasten möglich. Über den Verbraucher lassen sich Überspannungen auf einfache Weise abbauen. Der Schaltungsaufbau ist dabei einfach und zugleich zuverlässig.

Der jeweilige Verbraucher lässt sich getaktet zuschalten und mit zumindest einer zum Verbraucher parallel geschalteten Diode koppeln. So lassen sich einerseits Überspannungen bei Laden durch den Spannungsabfall über den Verbraucher reduzieren und andererseits werden im Rückwärtsbetrieb oder beim Entladen und/oder durch schaltungs- oder bauteilimmanente Induktivitäten negative Spannungsimpulse auf die jeweilige Durchlassspannung begrenzt.

Da die Diode parallel zu einer Vielzahl von in Reihe geschaltenen Energiespeicherzellen eines Energiespeichermoduls oder einer Energiespeichermodulgruppe geschalten ist, wird an jeder Energiespeicherzelle nur ein Bruchteil der Durchlassspannung anliegen, wodurch die Energiespeicherzelle nicht in einem kritischen Spannungsbereich gerät, also nicht gefährdet wird.

In einer Weiterbildung weist die Überspanungsschutzschaltung zumindest eine Induktivität oder einen Drosselwandler oder zumindest eine Drosselwandlerschaltung auf. Hierdurch wird begünstigt, dass je nach Betriebsweise beim Laden oder Entladen bei einem fehlerbehafteten Energiespeichermoduls oder einer fehlerbehafteten Energiespeichermodulgruppe die durch eine Überspannung zur Verfügung stehende Energie an im Strang oder Rack in Serie benachbarte Energiespeichermodule oder Energiespeichermodulgruppen weitergegeben werden kann. Somit werden Verluste minimiert und die fehlerbehafteten Energiespeichermoduls oder einer fehlerbehafteten Energiespeichermodulgruppen vor Überspannungen geschützt. Zudem wird ein Ladungsausgleich der Energiespeichermodulgruppen ermöglicht.

Vorteilhaft ist die Überspanungsschutzschaltung der jeweiligen Energiespeichermodulgruppe mit der jeweils dazu benachbarten oder nachfolgenden Energiespeichermodulgruppe verbunden oder gekoppelt. Es wird erreicht, dass an der fehlerbehafteten Energiespeichermodulgruppe anliegende Spannung im Überspannungsfall der im Zuschaltmoment der Überspanungsschutzschaltung als beispielsweise Drosselwandlerschaltung fließenden Strom abgegriffen wird und die Ausgangsspannung Überspanungsschutzschaltung als beispielsweise Drosselwandlerschaltung auf die benachbarte oder nachfolgende Energiespeichermodulgruppe und damit auf die übrigen fehlerfreien Energiespeichermodulgruppen für einen Ladungsausgleich geleitet oder geschalten wird.

Damit kann der Strang auch bei einem fehlerhaften Strang oder einer fehlerbehafteten Energiespeichermodulgruppe weiter genutzt werden. Es geht lediglich die Speicherfähigkeit einer Energiespeichermodulgruppe verloren. Durch den elektronischen Schalter wird eine zu hohe Spannung über der abgeschalteten Strecke bzw. der Energiespeichermodulgruppe vermieden.

Wird die Überspanungsschutzschaltung als Überladungsschutzschaltung über jedes Energiespeichermodul, das auch eine Energiespeichermodulgruppe bilden kann, gewählt, wird die Spannung über der Fehlstelle kleiner, sowohl in Entladerichtung als auch in Laderichtung.

Vorteilhaft kann, wenn ein Transistor als Schalter verwendet wird, die Freilaufdiode die Diodenfunktion wahrnehmen.

Andere Varianten für die Ladeschaltung oder die Ladekomponente und die Ausgleichsschaltung oder die Entladekomponente sind nicht ausgeschlossen.

Indem zumindest eines der Energiespeichermodule in einem Rack eine Energiespeichermodulgruppe bildet oder dass zwei oder mehr Energiespeichermodule in einem Rack in eine, zwei oder mehr Energiespeichermodulgruppen je Rack aufteilbar oder zuordbar sind, wobei zumindest einer der Energiespeichermodulgruppen oder gemeinsam einer Vielzahl der Energiespeichermodulgruppen die Überspanungsschutzschaltung zugeordnet ist, wird eine Vereinfachung des Überspannungsschutz erreicht. Durch die Zusammenfassung wird ein bedarfsgerechtesVerschieben oder Ableiten von Energie oder einer Überspannung begünstigt.. Vorteilhaft ist die Überspanungsschutzschaltung parallel zur Energiespeichermodulgruppe oder parallel zur Vielzahl der Energiespeichermodulgruppen oder parallel zu einem Spannungsabgriff der Energiespeichermodulgruppe oder der Vielzahl der Energiespeichermodulgruppen geschalten. So kann in einem Fehlerfall ein gezielter Überspannungsschutz einzelner oder zusammengefasster Energiespeichermodule erfolgen.

Beispielsweise erfolgt die Bildung der Energiespeichermodulgruppen hälftig je Rack, so dass die Energiespeichermodule in einem Rack beispielsweise in eine erste Energiespeichermodulgruppe im oberen Teil und in eine zweite Energiespeichermodulgruppe im unteren Teil des Racks aufgeteilt oder zugeordnet sind. Vorzugsweise sind die Energiespeichermodulgruppen gleich groß. Andere oder weitere Unterteilungen oder Bildungen von Energiespeichermodulgruppen innerhalb eines Racks mit jeweils unterschiedlicher Anzahl an Energiespeichermodulen sind jedoch auch möglich. Ebenso kann eine Unterteilung oder Aufteilung der Energiespeichermodule in weitere Energiespeichermodulgruppen erfolgen, so dass die Energiespeichermodule auch in drei, vier oder mehr Energiespeichermodulgruppen je Rack aufteilbar oder zuordbar sind. Ebenso kann ein Energiespeichermodul für sich bereits eine Energiespeichermodulgruppe bilden.

In einer Weiterbildung sind die Energiespeichermodulgruppen innerhalb eines Racks in Serie geschalten, wodurch sich Schaltungsaufbau vereinfacht.

In einer Weiterbildung ist zumindest eine der Energiespeichermodulgruppen eines Racks zu zumindest einer der Energiespeichermodulgruppen zumindest eines weiteren Racks parallel geschaltet, wobei den jeweils parallel geschalteten Energiespeichermodulgruppen gemeinsam die Überspanungsschutzschaltung zugeordnet ist. Vorteilhaft wird hierdurch der Ladungsausgleich und zugleich die Verfügbarkeit erhöht, da Ausfälle eines Energiespeichermoduls oder einer Energiespeichermodulgruppe durch die dazu parallel geschalteten Energiespeichermodulgruppen abgefangen oder ausbalanciert werden.

Vorteilhaft ist die jeweilige Überspanungsschutzschaltung einer der Energiespeichermodulgruppen oder einer Vielzahl von Energiespeichermodulgruppen mit der jeweils dazu im Strang vorgeschalteten und/oder nachgeschalteten, also rackübergreifend, oder im Rack in Serie geschalteten Energiespeichermodulgruppen oder Vielzahl von Energiespeichermodulgruppen verbunden oder gekoppelt.

Dementsprechend ist nach Ausführung die Überspanungsschutzschaltung mit einer im gegebenenfalls gebildeten Strang vorherigen oder nachfolgenden Energiespeichermodulgruppe verbindbar. Die im Strang vorherige oder nachfolgende Energiespeichermodulgruppe kann eine Energiespeichermodulgruppe aus dem gleichen Rack oder einem im Strang vorherigen oder nachfolgenden Rack sein. So kann die Funktionalität eines Stranges auch mit einer fehlenden Energiespeichermodulgruppe aufrechterhalten bleiben, wobei dementsprechend weniger Energie gespeichert werden kann.

Vorteilhaft ist die jeweilige Überspanungsschutzschaltung individuell zuschaltbar oder ansteuerbar, so dass ein bedarfsgerechtes Zuschalten erreicht wird. So lässt sich der Überladungsschutz bei einer Energiespeichermodulgruppe auch nur an den jeweiligen problembehafteten Energiespeichermodulen zuschalten, während die übrigen Energiespeichermodule fehlerfrei in Betrieb sind.

In einer Weiterbildung ist die Überspanungsschutzschaltung bedarfsgerecht zwischen der Ladeschaltung und der Ausgleichsschaltung umschaltbar. So kann bei einem fehlerbehafteten Energiespeichermodule oder einer fehlerbehafteten Energiespeichermodulgruppe je nach Betriebsweise für die jeweilige Energieverschiebung zur Vermeidung von kritischen Überspannungen die Ladeschaltung oder Ausgleichsschaltung individuell zugeschaltet bzw. abgeschaltet werden.

Vorteilhaft lässt sich die durch eine Überspannung oder Überladung zur Verfügung stehende Energie oder Ladung zum Schutz vor Zerstörung oder für einen Ausgleich von einem Energiespeichermodul oder einer Energiespeichermodulgruppe bedarfsgerecht an im Strang nachfolgende oder davorliegende Energiespeichermodule und/oder Energiespeichermodulgruppen ableiten oder verschieben. Es erfolgt somit ein modulübergreifender Ladungsausgleich oder ein Modulbalancing. Die Überspanungsschutzschaltung ist somit auch eine Ladungsausgleichsschaltung.

Dabei kann die Ladungsausgleichsschaltung unabhängig von der Betriebsweise des Ladens oder des Entladens die Energie oder Ladung an im Strang nachfolgende und/oder davorliegende Energiespeichermodule oder Energiespeichermodulgruppen ableiten oder verschieben.

In einer Weiterbildung ist jeweils einer Energiespeichermodulgruppe eine Ausgleichsschaltung zugeordnet und mit der Energiespeichermodulgruppe verbindbar. Hierdurch wird eine sichere und auf einen definierten Zustand Entladung der jeweiligen getrennten oder fehlerhaften Energiespeichermodulgruppe ermöglicht.

Vorzugsweise ist die Überspanungsschutzschaltung mit zumindest zwei Energiespeichermodulgruppen verbindbar, so dass die Funktionsfähigkeit des Racks oder Stranges mit einer problembehafteten Energiespeichermodulgruppe oder einem problembehafteten Energiespeichermodul durch ein Ableiten oder Verschieben der durch eine oder als potentielle Überspannung zur Verfügung stehende Energie oder Ladung an die zumindest eine weitere Energiespeichermodulgruppe im Rack oder Strang aufrechterhaltbar ist oder erhalten bleibt. So kann die Funktionalität eines Stranges oder eines Racks auch mit einer oder der jeweils problembehafteten oder fehlerbehafteten Energiespeichermodulgruppe aufrechterhalten werden.

So ist die Überspanungsschutzschaltung mit zumindest zwei Energiespeichermodulgruppen verbindbar, indem die Überspanungsschutzschaltung mit der entsprechenden zumindest zweiten Energiespeichermodulgruppe vor oder nach der entsprechenden ersten Energiespeichermodulgruppe im Rack oder Strang verbunden ist.

Weiterhin kann Überspanungsschutzschaltung mit zumindest zwei Energiespeichermodulgruppen so verbindbar sein, indem die Überspanungsschutzschaltung ausgehend von einer zu schützenden Energiespeichermodulgruppe vor und nach dieser zu schützenden Energiespeichermodulgruppe mit einer zweiten, im Rack oder Strang davorliegenden Energiespeichermodulgruppe und einer dritten, im Rack oder Strang danachliegenden Energiespeichermodulgruppe verbunden ist.

Mehrere Ausführungsbeispiele der Erfindung sind in den Zeichnungen dargestellt und werden im Folgenden näher beschrieben. Es zeigen:

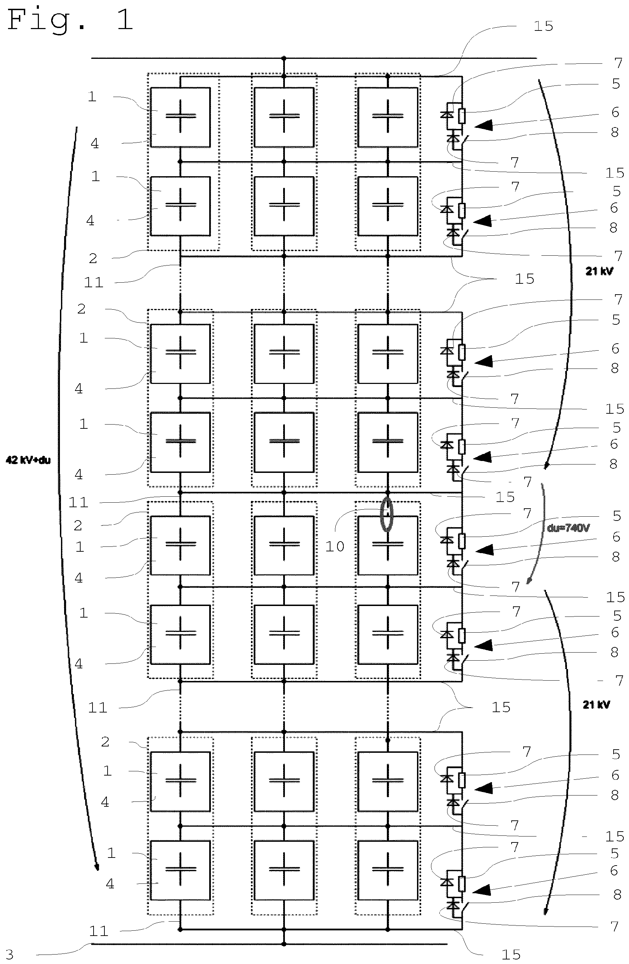

Fig. 1 bis 3 eine schematische Darstellung eines Energiespeichers im Fehlerfall mit einem Überspanungsschutzsystem, wobei Racks jeweils in Serie geschalten und jeweils drei Unterstränge bilden, die zusammen einen Strang, wobei je Rack zwei Energiespeichermodulgruppen vorhanden sind und jeweils die Energiespeichermodulgruppen einer Rackebene oder Rackhälfte rackübergreifend bzw. unterstrangübergreifend parallel geschalten sind, wobei jeweils den parallelgeschalteten Energiespeichermodulgruppen eine Überspanungsschutzschaltung zugeordnet ist.

In den Figuren 1 bis 3 sind jeweils Energiespeicher mit dem erfindungsgemäßen Überspanungsschutzsystem im Fehlerfall mit einer Fehlstelle 10 dargestellt, wobei in den jeweiligen konkreten Beispielen die Racks 2 zunächst jeweils in Serie geschalten und drei parallele Unterstränge 11 bilden, die zusammen einen gemeinsamen Strang 3 bilden. Je Rack 2 sind zwei im jeweiligen Rack 2 seriell verbundene Energiespeichermodulgruppen 4 vorhanden. Jeweils die Energiespeichermodulgruppen 4 die in Bezug auf die in parallelen Unterstrang 11 benachbarten Racks 2 im konkreten Beispiel in einer Rackebene 12 oder Rackhälfte 12 oder in Bezug auf die rackinterne serielle Verschaltung in der jeweiligen Reihenfolge parallel benachbart angeordnet sind, sind rackübergreifend bzw. unterstrangübergreifend parallel geschalten. Die drei parallelen Unterstränge 5 können im Bereich zwischen den jeweils seriell aufeinander folgenden und jeweils parallel geschalteten Racks 2 auch zu einem gemeinsamen Unterstrang 5 zusammengefasst sein (nicht dargestellt). Jeweils zu den im konkreten Beispiel drei parallel geschalteten Energiespeichermodulgruppen 4 ist eine dazu parallel geschaltete Überspanungsschutzschaltung 6 zugeordnet.

Im Ausführungsbeispiel gemäß der Figur 1 umfasst die zu den parallel geschalteten Energiespeichermodulgruppen 4 parallel geschaltete Überspanungsschutzschaltung 6 als Mittel zum Entladen Energiespeichermoduls 1 einen Verbraucher 5 in Form einer ohmschen Last und einen elektronischen Schalter 8, beispielswiese einen IGBT, sowie jeweils zum Verbraucher 5 und zum elektronischen Schalter 8 parallel geschaltete Dioden 7. Hierbei ist der elektronischen Schalter 8 getaktet ansteuerbar. Je nach Verbraucher kann der elektronischen Schalter 8 auch für einen zeitlich begrenzten Dauerbetrieb ausgelegt sein.

Kommt es beim Laden des Energiespeichers wegen einer Fehlstelle 10 oder Auftrennung 10 an einer der Energiespeichermodulgruppen 4 zu einer Überspannung, schließt der elektronischen Schalter 8 und es fließt ein die Überspannung abbauender Strom über den Verbraucher 5.

Die Dioden 7 schützen hierbei die Überspanungsschutzschaltung 6 sowie die Energiespeichermodulgruppen 4 je nach Spannungsbereich und Verkabelung oder Verschaltung vor durch induktive Einflüsse entstehende Spannungsspitzen.

Weiterhin verhindern die Dioden 7 bei negativen Spannungsimpulse oder Potentialumkehrungen bei der Entladung und/oder durch schaltungs- oder bauteilimmanente Induktivitäten auftretend, dass die Energiespeicherzellen einer kritischen Spannung ausgesetzt sind. Die im konkreten Beispiel an den Dioden 7 anliegende Spannung von beispielsweise 0,7 V verteilt sich auf alle Energiespeicherzellen der zugeordneten Energiespeichermodulgruppen 4, so dass diese zuverlässig geschützt sind.

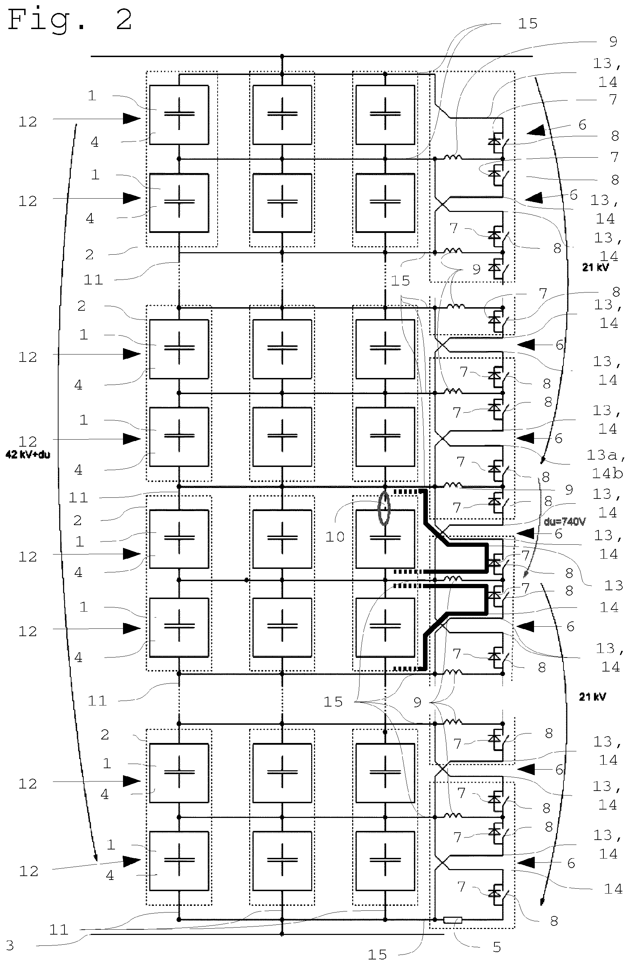

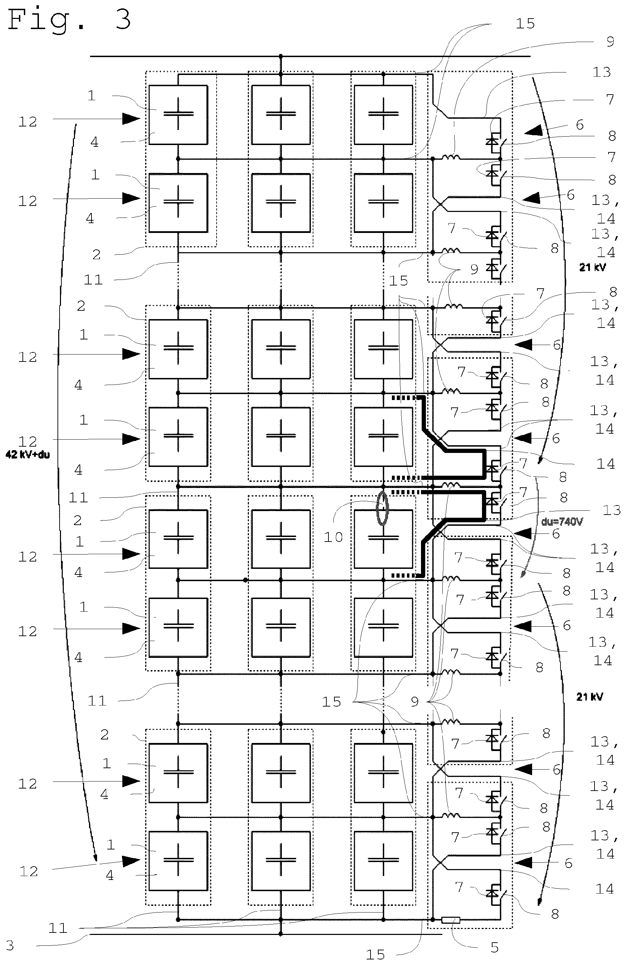

Im Ausführungsbeispiel gemäß der Figuren 2 und 3 umfasst die zu den parallel geschalteten Energiespeichermodulgruppen 4 parallel geschaltete Überspanungsschutzschaltung 6 als Mittel zum Laden oder Entladen der Vielzahl von Energiespeichermodulen 1 einen Ladezweig 13 und einen Ausgleichszweig 14, wobei sich diese Zuordnung je nach Verschieberichtung oder Ableitrichtung der Energie oder Überspannung auf die jeweilige Überspanungsschutzschaltung 6 der jeweils parallel geschalteten Energiespeichermodulgruppen 4 bezieht.

Die Überspanungsschutzschaltung 6 gemäß der Figuren 2 und 3 sieht vor, dass Überspannungen oder Überladungen, welche sich beim Laden und/oder bei Entladen ergeben können oder dass verfügbare gespeicherte Energie insbesondere an die jeweils seriell danach liegenden und/oder seriell davorliegenden Energiespeichermodulgruppen 4 abgeleitet oder verschoben werden kann. Dies kann unabhängig von der jeweiligen Betriebsweise, also dem Laden oder Entladen des Energiespeichers erfolgen.

Hierfür sind die benachbarten Überspanungsschutzschaltung 6 über einen gemeinsamen Zweig, welcher zugleich eine Zuleitung von den oder zu den zugeordneten parallel geschalteten Energiespeichermodulgruppen 4 ist, der eine Induktivität 9 als Drosselspule 9 aufweist, miteinander und den parallel geschalteten Energiespeichermodulgruppen 4 verbunden.

Weiterhin weist die Überspanungsschutzschaltung 6 mit den jeweiligen Ladezweigen 13 und Ausgleichszweigen 14 als Mittel zum Laden oder Entladen der Vielzahl von Energiespeichermodulen 1 der Energiespeichermodulgruppen 4 jeweils einen elektronischen Schalter 8 und eine dazu parallel geschaltete Diode 7 auf.

In Bezug auf die jeweilige Überspanungsschutzschaltung 6 der jeweils parallel geschalteten Energiespeichermodulgruppen 4 ist der Ladezweig 13, wie in Figur 2 dargestellt, von einer ersten Zuleitung 15 der Zuleitungen 15 von den zugeordneten parallel geschalteten Energiespeichermodulgruppen 4 über den elektronischen Schalter 8 und der dazu parallel geschalteten Diode 7 über eine Induktivitäten 9 als Drosselspule 9 im gemeinsamen Zweig benachbarter Überspanungsschutzschaltung 6 zu einer zweiten Zuleitung 15 der Zuleitungen 15 von den zugeordneten parallel geschalteten Energiespeichermodulgruppen 4 geführt. Damit bildet der Ladezweig 13 zugleich einen Drosselaufladezweig 13, beispielsweise während des Ladens des Energiespeichers oder auch während des Entladens, der bei Erreichen einer Überspannung oder bei verfügbarer verschiebbarer Energie zum Ausgleichen der Energiespeichermodulgruppen 4 über den Energiespeichermodulgruppen 4 mit ggf. einer fehlerbehafteten Energiespeichermodulgruppe 4 mittels des elektronischen Schalter 8 im Ladezweig 13 als Drosselaufladezweig 13 zuschaltbar ist.

Mit dem Laden der Induktivitäten 9 als Drosselspule 9 erfolgt zunächst auch ein Entladen der jeweiligen der Überspanungsschutzschaltung 6 zugeordneten Energiespeichermodulgruppen 4, so dass der Ladezweig 13 als Drosselaufladezweig 13 eine Entladekomponente in Bezug auf die betroffenen Energiespeichermodulgruppen 4 darstellt.

Ist die Induktivität 9 als Drosselspule 9 im Ladezweig 13 als Drosselaufladezweig 13 geladen, öffnet der elektronischen Schalter 8 im Ladezweig 13 als Drosselaufladezweig 13 und der Drosselstrom fließt, wie in Figur 2 dargestellt, unter Abbau des Magnetfelds in gleicher Richtung in einen Ausgleichszweig 14 als Drosselentladezweig 14 der in diesem Fall nachfolgend benachbarten Überspanungsschutzschaltung 6 der in Rack 2 oder Strang 3 nachfolgenden jeweils parallel geschalteten Energiespeichermodulgruppen 4 weiter.

Mit dem Entladen der Induktivitäten 9 als Drosselspule 9 erfolgt zunächst auch ein Laden der jeweiligen der Überspanungsschutzschaltung 6 zugeordneten Energiespeichermodulgruppen 4, so dass der Ausgleichszweig 14 als Drosselentladezweig 14 eine Ladekomponente in Bezug auf die betroffenen Energiespeichermodulgruppen 4 darstellt.

Der Ausgleichszweig 14 als Drosselentladezweig 14 umfasst, wie in Figur 2 dargestellt, die zweite Zuleitung 15 der Zuleitungen 15 der Überspanungsschutzschaltung 6 von den im Rack 2 oder Strang 3 vorherigen zugeordneten parallel geschalteten gegebenenfalls fehlerbehafteten Energiespeichermodulgruppen 4, die zugleich die erste Zuleitung 15 der Zuleitungen 15 der Überspanungsschutzschaltung 6 dieser nachfolgenden zugeordneten parallel geschalteten Energiespeichermodulgruppen 4 ist, weiterhin die gemeinsame Induktivität 9 als Drosselspule 9, den elektronischen Schalter 8 und der dazu parallel geschalteten eine Diode 7 sowie die zweiten Zuleitung 15 der Zuleitungen 15 von den dieser zugeordneten parallel geschalteten Energiespeichermodulgruppen 4 an die Überspanungsschutzschaltung 6.

Der elektronische Schalter 8 ist beim Entladen der Induktivität 9 als Drosselspule 9 geöffnet während wegen der Stromrichtung die Diode 7 leitend ist.

Dementsprechend wird die durch eine Überspannung verfügbare Energie an die nachfolgenden der Überspanungsschutzschaltung 6 zugeordneten parallel geschalteten Energiespeichermodulgruppen 4 geleitet.

Der Ladezweig 13, um eine Überspannung oder verfügbare verschiebbare Energie in die im Rack 2 oder Strand 3 davor liegenden Energiespeichermodulgruppen 4 abzuleiten oder zu verschieben, beispielsweise bei der Betriebsweise Entladen oder auch beim Laden, ist hingegen, wie in Figur 3 dargestellt, von der zweiten Zuleitung 15 der Zuleitungen 15 von den zugeordneten parallel geschalteten Energiespeichermodulgruppen 4 über den elektronischen Schalter 8 und der dazu parallel geschaltet eine Diode 7 über eine der Induktivitäten 9 als Drosselspule 9 zu ersten Zuleitung 15 der Zuleitungen 15 von den zugeordneten parallel geschalteten Energiespeichermodulgruppen 4, die zugleich die zweite Zuleitung 15 der Zuleitungen 15 der Überspanungsschutzschaltung 6 dieser davor liegenden zugeordneten parallel geschalteten Energiespeichermodulgruppen 4 ist, geführt.

Damit bildet je nach Verschieberichtung oder Ableitrichtung der Energie oder Überspannung, beispielswiese beim Entladen an die danach liegenden oder nachfolgenden Energiespeichermodulgruppen 4 oder an die davor liegenden Energiespeichermodulgruppen 4 der Ausgleichszweig 14 zugleich einen Ladezweig 13 oder Drosselaufladezweig 13 oder es bildet der Ladezweig 13 oder Drosselaufladezweig 13 einen Ausgleichszweig 14 oder Drosselentladezweig 14, der je nach Verschieberichtung oder Ableitrichtung der Energie oder Überspannung zur Energienutzung aus oder bei Erreichen einer Überspannung über den Energiespeichermodulgruppen 4 beispielsweise mit einer fehlerbehafteten Energiespeichermodulgruppe 4 mittels des elektronischen Schalter 8 getaktet zuschaltbar ist.

Ist die Induktivität 9 als Drosselspule 9 im Ladezweig 13 als Drosselaufladezweig 13 geladen, öffnet der elektronischen Schalter 8 im Ladezweig 13 als Drosselaufladezweig 13 und der Drosselstrom fließt, wie in Figur 3 dargestellt, unter Abbau des Magnetfelds in gleicher Richtung in einen Ausgleichszweig 14 als Drosselentladezweig 14 der davor liegend benachbarten Überspanungsschutzschaltung 6 der in Rack 2 oder Strang 3 vorherigen jeweils parallel geschalteten Energiespeichermodulgruppen 4 weiter.

Der Ausgleichszweig 14 oder Drosselentladezweig 14 umfasst, wie in Figur 3 dargestellt, die zweite Zuleitung 15 der Zuleitungen 15 der Überspanungsschutzschaltung 6 von den im Rack 2 oder Strang 3 vorherigen zugeordneten parallel geschalteten Energiespeichermodulgruppen 4, die zugleich die erste Zuleitung 15 der Zuleitungen 15 der Überspanungsschutzschaltung 6 dieser nachfolgenden zugeordneten parallel geschalteten gegebenenfalls fehlerbehafteten Energiespeichermodulgruppen 4 ist, weiterhin die gemeinsame Induktivität 9 als Drosselspule 9, den elektronischen Schalter 8 und der dazu parallel geschalteten Diode 7 sowie die erste Zuleitung 15 der Zuleitungen 15 von den dieser davor liegend zugeordneten parallel geschalteten Energiespeichermodulgruppen 4 an die Überspanungsschutzschaltung 6.

Der elektronische Schalter 8 ist beim Entladen der Induktivität 9 als Drosselspule 9 geöffnet während wegen der Stromrichtung die Diode 7a leitend ist.

Dementsprechend wird die verfügbare Energie oder die durch eine Überspannung verfügbare Energie an die vorherigen der Überspanungsschutzschaltung 6 zugeordneten parallel geschalteten Energiespeichermodulgruppen 4 geleitet.

Damit ist je nach Verschieberichtung oder Ableitrichtung der Energie oder Überspannung der Ladezweig 13 zugleich der Ausgleichszweig14 der nachfolgenden Überspanungsschutzschaltung 6 oder es ist Ausgleichszweig14zugleich der Ladezweig 13 der vorherigen Überspanungsschutzschaltung 6 ist.

Die Überspanungsschutzschaltung 6 der in der ersten Rackebene 12 oder Rackhälfte 12 oder in Bezug auf die rackinterne serielle Verschaltung in der jeweiligen Reihenfolge ersten parallel geschalteten Energiespeichermodulgruppen 4 in den Untersträngen 11 weisen ist je nach Verschieberichtung oder Ableitrichtung der Energie oder Überspannung nur einen Ladezweig 13 als Drosselaufladezweig 13 für die Verschiebung oder Ableitung der Energie oder Überspannung an die danach liegenden oder nachfolgenden Energiespeichermodulgruppen 4 bzw. damit den Ausgleichszweig14 als Drosselentladezweig 14b für die Verschiebung oder Ableitung der Energie oder Überspannung von den danach liegenden oder nachfolgenden Energiespeichermodulgruppen 4 an diese ersten oder davor liegenden Energiespeichermodulgruppen 4.

Der Ausgleichszweig 14 der Überspanungsschutzschaltung 6 der in der letzten Rackebene 12 oder Rackhälfte 12 oder in Bezug auf die rackinterne serielle Verschaltung in der jeweiligen Reihenfolge letzten parallel geschalteten Energiespeichermodulgruppen 4 der Unterstränge 11 weist statt der Induktivität 9 nur einen Verbraucher 5 auf, über den dann im Fehlerfall die Überspannung abgebaut wird.

Im Ausführungsbeispiel gemäß der Figuren 2 und 3 umfasst die zu den parallel geschalteten Energiespeichermodulgruppen 4 parallel geschaltete Überspanungsschutzschaltung 6 ist je nach Verschieberichtung oder Ableitrichtung der Energie oder Überspannung jeweils einen Ladezweig 13 und einen Ausgleichszweig 14.

Die Dioden 7 sind im Normalbetrieb jeweils in Sperrrichtung geschalten. Beim Einsatz der Überspanungsschutzschaltung 6 zum Abbau einer Überspannung bei Laden oder zur Energienutzung beim Entladen des Energiespeichers werden durch die Verschaltung und in Kombination der jeweiligen Induktivität 9 als Drosselspule 9 leitend. Ebenso werden die jeweiligen Dioden 7 bei negativen Spannungsimpulsen oder bei einer Potentialumkehr leitend. Da zu den jeweils parallel geschalteten Energiespeichermodulgruppen 4 jeweils zwei Dioden parallel geschalten sind, reduziert sich die den Energiespeichermodulgruppen 4 anliegende Spannung auf die Diodenspannung von beispielsweise 0,7 V.

Vorgesehen ist für die Überspanungsschutzschaltungen 6 jeweils eine Spannungsüberwachung (nicht dargestellt), welche dediziert je Überspanungsschutzschaltung 6 oder durch zumindest eine zusätzliche oder eine umfassendere Überwachungsschaltung oder Überwachungsanordnung vorhanden ist.

### Zusammenstellung der Bezugszeichen

1 - Energiespeichermodul
2 - Rack
3 - Strang
4 - Energiespeichermodulgruppe
5 - Verbraucher
6 - Überspanungsschutzschaltung, Überladungsschutzschaltung, Spannungsüberwachung, Drosselwandlerschaltung
7, 7a - Diode
8 - elektronischen Schalter, Transistor
9 - Drosselspule, Induktivität
10 - Auftrennung, Fehlstelle
11 - Unterstrang
12 - Rackebene, Rackhälfte
13 - Ladezweig, Drosselaufladezweig Laden
14 - Ausgleichszweig Drosselentladezweig
15 - Zuleitung

## Patentansprüche

1. Überspanungsschutzsystem für einen Energiespeichers, wobei der Energiespeicher zumindest ein Energiespeichermodul (1) mit in Serie geschalteten Energiespeicherzellen umfasst, wobei das zumindest eine Energiespeichermodule (1) in einem Rack (2) anordbar ist oder das ein, zwei oder mehr Energiespeichermodule (1) zumindest ein Rack (2) bilden, wobei zumindest zwei oder mehr der Energiespeichermodule (1) in einem Rack (2) oder als Rack (2) in Serie geschalten sind ,
**dadurch gekennzeichnet,**
**dass** jeweils zumindest eines der Energiespeichermodule (1) eine Überspanungsschutzschaltung (6) aufweist oder dass eine Vielzahl von Energiespeichermodulen (1) gemeinsam eine Überspanungsschutzschaltung (6) aufweisen , wobei die Überspanungsschutzschaltung (6) parallel zum zumindest einen der Energiespeichermodule (1) oder parallel zur Vielzahl von Energiespeichermodulen (1) oder parallel zu den Energiespeichermodulen (1) eines Racks (2) geschalten ist.

2. Überspanungsschutzsystem nach Anspruch 1,
**dadurch gekennzeichnet,**
**dass** die Überspanungsschutzschaltung (6) zumindest ein Mittel zum Laden oder Entladen des Energiespeichermoduls (1) oder der Vielzahl von Energiespeichermodulen (1) umfasst.

3. Überspanungsschutzsystem nach einem der vorhergehenden Ansprüche 1 und 2,
**dadurch gekennzeichnet,**
**dass** die Überspanungsschutzschaltung (6) oder das zumindest eine Mittel zum Laden oder Entladen des Energiespeichermoduls (1) oder der Vielzahl von Energiespeichermodulen (1) zumindest eine Diode (7, 7a) umfasst.

4. Überspanungsschutzsystem nach einem der vorhergehenden Ansprüche,
**dadurch gekennzeichnet,**
**dass** die Überspanungsschutzschaltung (6) oder das zumindest eine Mittel zum Laden oder Entladen des Energiespeichermoduls (1) oder der Vielzahl von Energiespeichermodulen (1) einen elektronischen Schalter (8) aufweisen.

5. Überspanungsschutzsystem nach einem der vorhergehenden Ansprüche,
**dadurch gekennzeichnet,**
**dass** Überspanungsschutzschaltung (6) oder das zumindest eine Mittel zum Laden oder Entladen des Energiespeichermoduls (1) oder der Vielzahl von Energiespeichermodulen (1) einen Verbraucher (5) aufweist.

6. Überspanungsschutzsystem nach einem der vorhergehenden Ansprüche,
**dadurch gekennzeichnet,**
**dass** die Überspanungsschutzschaltung (6) oder das zumindest eine Mittel zum Laden oder Entladen des Energiespeichermoduls (1) oder der Vielzahl von Energiespeichermodulen (1) zumindest eine Induktivität (9) oder einen Drosselwandler (6) umfasst oder zumindest eine Drosselwandlerschaltung (6) aufweist.

7. Überspanungsschutzsystem nach einem der vorhergehenden Ansprüche,
**dadurch gekennzeichnet,**
**dass** zumindest eines der Energiespeichermodule (1) in einem Rack (2) eine Energiespeichermodulgruppe (4) bildet oder dass zwei oder mehr Energiespeichermodule (1) in einem Rack (2) in eine, zwei oder mehr Energiespeichermodulgruppen (4) je Rack (2) aufteilbar oder zuordbar sind, wobei zumindest einer der Energiespeichermodulgruppen (4) oder gemeinsam einer Vielzahl der Energiespeichermodulgruppen (4) die Überspanungsschutzschaltung (6) zugeordnet ist.

8. Überspanungsschutzsystem nach einem der vorhergehenden Anspruch 7,
**dadurch gekennzeichnet,**
**dass** zumindest eine der Energiespeichermodulgruppen (4) eines Racks (2) zu zumindest einer der Energiespeichermodulgruppen (4) zumindest eines weiteren Racks (2) parallel geschaltet ist, wobei den jeweils parallel geschalteten Energiespeichermodulgruppen (4) gemeinsam die Überspanungsschutzschaltung (6) zugeordnet ist.

9. Überspanungsschutzsystem nach einem der vorhergehenden Ansprüche 7 und 8,
**dadurch gekennzeichnet,**
**dass** die jeweilige Überspanungsschutzschaltung (6) einer der Energiespeichermodulgruppen (4) oder einer Vielzahl von Energiespeichermodulgruppen (4) mit der jeweils dazu im Strang (3) oder Rack (2) in Serie vorgeschalteten und/oder nachgeschalteten Energiespeichermodulgruppe (4) oder Vielzahl von Energiespeichermodulgruppen (4) verbunden oder gekoppelt ist.

10. Überspanungsschutzsystem nach einem der vorhergehenden Ansprüche 7 bis 9,
**dadurch gekennzeichnet,**
**dass** die jeweilige Überspanungsschutzschaltung (6) individuell zuschaltbar oder ansteuerbar oder eigenständig ist.
